# EUROPÄISCHE PATENTANMELDUNG

(11) **EP 1 806 561 A1**
(43) Veröffentlichungstag der Anmeldung: **11.07.2007**
(21) Anmeldenummer: 06124709.4
(22) Anmeldetag: 24.11.2006
(51) Int. Cl.: G01C 21/34, G07B 15/00

(54) **Verfahren zum automatischen Ausarbeiten einer Route zwischen einem Ausgangspunkt und einem Zielpunkt in einem Navigationssystem eines Fahrzeugs**

(30) Priorität: 05.01.2006 DE 102006000926
(71) Anmelder: SIEMENS AKTIENGESELLSCHAFT, 80333 München (DE)
(72) Erfinder: Haunschmid, Herbert, 2201, Gerasdorf-Seyring (AT); Pohl, Alfred, 2130, Mistelbach (AT)

(57) **Zusammenfassung**

Verfahren zum automatischen Ausarbeiten einer Route zwischen einem Ausgangspunkt und einem Zielpunkt in einem Navigationssystem eines Fahrzeugs, welches sich in einem Mauterfassungssystem bewegt, bei welchem mit Hilfe von Positionsinformationen ausstrahlenden Einrichtungen ermittelte Positionsdaten des Fahrzeugs mit elektronisch hinterlegten Geodaten, welche zumindest einen Teil des Straßennetzes eines geographischen Gebietes umfassen, zwecks Positionsbestimmung des Fahrzeugs und Mautobjekterkennung verglichen werden, wobei als Ergebnis der Mautobjekterkennung eine Mautgebühr für die Benutzung mautpflichtiger Objekte von einem Mautguthaben abgebucht wird. Es ist vorgesehen, dass zum Ausarbeiten der Route der Betrag des Mautguthabens berücksichtigt wird.

## Beschreibung

Verfahren zum automatischen Ausarbeiten einer Route zwischen einem Ausgangspunkt und einem Zielpunkt in einem Navigationssystem eines Fahrzeugs

Die Erfindung betrifft ein Verfahren zum automatischen Ausarbeiten einer Route zwischen einem Ausgangspunkt und einem Zielpunkt in einem Navigationssystem eines Fahrzeugs, welches sich in einem Mauterfassungssystem bewegt, bei welchem mit Hilfe von Positionsinformationen ausstrahlenden Einrichtungen ermittelte Positionsdaten des Fahrzeugs mit elektronisch hinterlegten Geodaten, welche zumindest einen Teil des Straßennetzes eines geographischen Gebietes umfassen, zwecks Positionsbestimmung des Fahrzeugs und Mautobjekterkennung verglichen werden, wobei als Ergebnis der Mautobjekterkennung eine Mautgebühr für die Benutzung mautpflichtiger Objekte von einem Mautguthaben abgebucht wird, gemäß dem Oberbegriff des Anspruchs 1.

Die Erfindung betrifft weiters eine Vorrichtung zur Ausarbeitung einer Route, vorzugsweise ein Navigationssystem in einem Fahrzeug zur Ausarbeitung einer Route zwischen einem Ausgangspunkt und einem Zielpunkt gemäß dem Oberbegriff des Anspruchs 12.

Mauterfassungssysteme kommen zum Einsatz, um eine festgesetzte Gebühr für die Nutzung von Straßen, Brücken, Tunnels oder anderer Infrastrukturbauwerke einzuheben. Die erhaltenen Mautgebühren dienen neben ihrer Funktionalität als zusätzliche Einnahmequelle für die öffentlichen Haushalte vorwiegend der Aufrechterhaltung bestehender Infrastruktur sowie der Finanzierung zukünftiger Straßenbauprojekte. Über die Vergebührung der Straßenbenutzung kann weiters eine Internalisierung von externen Folgekosten des Verkehrsbetriebes, die vom Verursacher selbst nicht vollständig getragen werden, erzielt werden. So können etwa ökologische und soziale Kosten zufolge Lärm- und Luftverschmutzung sowie die aus Unfällen resultierenden Ressourcenausfallkosten mittels entsprechender Mautveranschlagung abgegolten werden.

Darüber hinaus soll mittels flächendeckender Mauterfassungssysteme eine Entlastung der Umwelt von Verkehrsemissionen erreicht werden, indem für die motorisierte Verkehrsteilnahme ein adäquater Preis festgesetzt wird, um den LKW-Schwerverkehr solcherart zur Nutzung anderer Transportwege, beispielsweise der Schiene, oder Verbesserung der Vertriebslogistik zu motivieren. Da Mauterfassungssysteme aber ebenso auch den Individualverkehr durch PKW-Benutzer betreffen, wird der ökologische Aspekt generell ins öffentliche Bewusstsein gehoben und soll einer langfristigen Strategie zur CO₂-Reduktion dienen.

Nutzungsabhängige Mautsysteme zeichnen sich dadurch aus, dass die zu entrichtende Mautgebühr von der tatsächlich erfolgten Streckennutzung abhängig ist. Die Mautgebühr kann dabei anhand tatsächlich zurückgelegter Entfernungen, durchfahrener Streckenabschnitte, Tunneldurchquerungen oder beispielsweise auch zeitlicher Aufenthalte in bestimmten Zonen errechnet werden. Es ist ebenfalls möglich, entfernungsbezogene Gebühren anhand der zeitlichen Frequentierung von Verkehrsstrecken so zu gewichten, dass beispielsweise für eine Straßennutzung während der Hauptverkehrszeiten bzw. des Berufsverkehrs ein höherer Tarif verrechnet wird als für eine Nutzung abseits der bekannten Stoßzeiten. Es ist weiters üblich, die Höhe der Maut von verschiedenen Eigenschaften des Mautteilnehmers bzw. seines Fahrzeuges abhängig zu machen oder eine Maut bei Vorliegen bestimmter begünstigungswürdiger Eigenschaften ganz entfallen zu lassen. Als Beurteilungskriterien zur Mautbemessung werden zumeist Größe und Gewicht eines Fahrzeuges herangezogen, aber auch Unterschiede hinsichtlich der Achszahl, der Schadstoffklasse und der Art der transportierten Güter können berücksichtigt werden.

Ebenso existieren in vielen europäischen Ländern Sondermautstrecken, bei welchen eine zusätzliche Maut vorgeschrieben wird. Eine solche zusätzliche, zur regulären Maut hinzusummierte Maut wird bei manchen Tunnels, Brücken oder Privatstra-ßen eingehoben, welche unter besonders kostenintensivem Einsatz errichtet wurden oder in ihrer Erhaltung besonders aufwändig sind, wie beispielsweise Gebirgsstrassen oder Tunnelstrassen.

Bereits bekannte, nutzungsabhängige Mauterfassungssysteme arbeiten mit mobilen Detektionseinheiten, so genannten OBUs (On Board Units). Dabei handelt es sich um Geräte, die in ein Fahrzeug eingebaut werden, um eine automatische Abrechnung von Mautgebühren innerhalb eines Mauterfassungssystems anhand der vom Fahrzeug im Mauterfassungssystem zurückgelegten Strecke zu ermöglichen, in dem sie die Grundlage zur Berechnung der Mautgebühren detektieren, nämlich die zurückgelegte Wegstrecke bzw. die benutzten Streckenabschnitte. Die deutschen, französischen, italienischen, österreichischen und spanischen Autobahnbetreiber, aber auch zunehmend weitere Länder inner- und außerhalb Europas ziehen OBUs zur Detektierung von zurückgelegten Wegstrecken bzw. befahrenen Streckenabschnitten heran. Die OBUs können dabei käuflich erworben oder gemietet werden und sind mit einer für das jeweilige Mauterfassungssystem eindeutigen Kennung versehen, die im Zuge des Ausgabeprozesses, einer bestimmten natürlichen oder juristischen Person zugeordnet wird, um eine Verrechnung der angefallenen Mautgebühren zu ermöglichen.

Prinzipiell ist der Einsatz von mobilen Detektionseinheiten in zwei unterschiedlichen Mauterfassungssystemen üblich, nämlich einerseits in GNSS (Global Navigation Satellite System) basierten Systemen und andererseits in auf Infrastruktur basierten Systemen.

GNSS basierte Systeme arbeiten in den meisten Fällen mittels dem unter dem Kürzel GPS (Global Positioning System) bekannten Satellitenpositionsbestimmungssystem. Andere Satellitenpositionsbestimmungssysteme sind bereits in Planung. Die OBU kann mit Hilfe der von den Satelliten ausgestrahlten Signale eine Positionsbestimmung vornehmen. Dadurch ist es möglich, den Weg, den die OBU innerhalb eines Mauterfassungssystems zurücklegt, zu bestimmen.

Infrastruktur basierte Systeme arbeiten mit an den Straßen eingerichteten Infrastrukturen wie beispielsweise Mautportalen. Die OBU kann in diesem Fall beispielsweise via Mikrowelle nach dem DSRC (Dedicated Short Range Communication) Standard mit den Mautportalen kommunizieren, wobei anhand dieser Kommunikation nachvollzogen werden kann, welche Streckenabschnitte von der OBU befahren wurden.

Die mobilen Detektionseinheiten sind zumindest mit einer Lokalisierungseinheit sowie zusätzlich meist mit zumindest einer Sende/Empfangseinheit ausgestattet.

Die Lokalisierungseinheit dient der Bestimmung der aktuellen Position der OBU und somit des Fahrzeuges, in welchem die OBU angeordnet ist. Sie arbeitet mit entweder mit den beschriebenen Satelliten zusammen oder aber mit der straßenseitig angeordneten Infrastruktur.

Die Sende/Empfangseinheit dient dazu, die OBU im Mauterfassungssystem anzumelden und eine Datenverbindung zu einer zentralen Recheneinheit bzw. einem zentralen Rechnerverbund herzustellen. Auf diese Art und Weise kann sich die OBU im System des Mautbetreibers anmelden und jene Daten an die zentrale Recheneinheit bzw. den zentralen Rechnerverbund übertragen, welche im Mauterfassungssystem für Be- bzw. Abrechnungen der Mautgebühren erforderlich sind. Aktuell arbeiten diese Sende/Empfangseinheiten nach dem GSM Standard. Prinzipiell sind jedoch auch andere Systeme, die zur drahtlosen Datenübertragung geeignet sind, einsetzbar. Im Falle von Infrastruktur basierten Systemen ist es auch möglich, dass Lokalisierungseinheit und Sende/Empfangseinheit beide nach dem DSRC Standard arbeiten. In einem solchen Fall ist die Kommunikation mit der zentralen Recheneinheit bzw. dem zentralen Rechnerverbund nur bei einer Durchfahrt unterhalb eines Mautportals möglich.

Generell sind zwei unterschiedliche Varianten der Verarbeitung der mittels der Lokalisierungseinheit ermittelten Positionsdaten bekannt.

Bei einer ersten Variante werden die von der Lokalisierungseinheit erfassten Positionsdaten direkt von der OBU ausgewertet, d.h. diese werden direkt von der OBU mit in der OBU gespeicherten Geodaten zwecks Mautobjekterkennung, verglichen. Die OBU entscheidet in diesem Fall, ob mautpflichtige Strecken zurückgelegt wurden oder nicht, d.h. sie identifiziert jene Gebiete, Strecken oder Streckabschnitte, die mautpflichtig sind und von der OBU bzw. dem entsprechenden Fahrzeug befahren wurden. Diese Daten können dann entweder direkt, aufbereitet, beispielsweise verschlüsselt und/oder komprimiert, oder nicht aufbereitet, an die zentrale Recheneinheit bzw. den zentralen Rechnerverbund zwecks Verknüpfung mit Tarifdaten zur Mautgebührenberechnung und Rechnungslegung übermittelt werden. Die Mautgebühr kann in diesem Fall gleich über ein Mautguthaben verfügendes Konto des Mautteilnehmers, welches beispielsweise vom Mautbetreiber geführt wird, abgebucht werden.

Alternativ dazu können gemäß der ersten Variante die aus der Mautobjekterkennung hervorgehenden Daten gleich von der OBU mit entsprechenden Tarifdaten, die in diesem Fall ebenfalls in der OBU gespeichert sind, verknüpft werden, um eine Mautgebühr zu errechnen, die dann entweder über die Datenverbindung zur zentralen Recheneinheit bzw. an den zentralen Rechnerverbund übermittelt wird, wo dann nur mehr die Rechnungslegung und Abbuchung von dem das Mautguthaben aufweisenden Konto des Mautteilnehmers als solches stattfindet oder aber von einer ein Mautguthaben aufweisende Wertkarte direkt an der OBU abgebucht wird.

Unter Mautobjekterkennung versteht man stets den Vergleich der von der Lokalisierungseinheit der mobilen Detektionseinheit ermittelten Positionsdaten mit im Mauterfassungssystem gespeicherten Geodaten und darin enthaltenen Mautobjekten.

Geodaten beschreiben das zu bemautende geographische Gebiet. Innerhalb der Geodaten sind so genannte Geoobjekte definiert, welche definierte Abschnitte oder Positionen im geographischen Gebiet beschreiben. Beispielsweise sind jene geographischen Bereiche bzw. jene Strassen und/oder Gebiete für deren Benützung Maut zu entrichten ist, als Geoobjekte (Mautobjekte) definiert. Aber auch andere Bereiche und Straßen, die nicht zu bemauten sind, können als Geoobjekte definiert sein. Befinden sich die ermittelten Positionsdaten innerhalb zu bemautender Geoobjekte (Mautobjekte) bzw. wurde das Überschreiten einer Grenze eines solchen Geoobjektes (Mautobjektes) detektiert, so ist für den innerhalb des Geoobjektes (Mautobjektes) befindlichen Streckenabschnitt bzw. für den jenseits der überschrittenen Grenze des Geoobjektes (Mautobjektes) befindlichen Streckenabschnitt eine Mautgebühr zu entrichten.

Diese erste Variante (dezentrales System) erfordert eine mit ausreichend Rechenleistung und mit ausreichend Speicherplatz ausgestattete OBU, da einerseits sämtliche Geodaten des mautpflichtigen Streckennetzes in der OBU gespeichert werden müssen und andererseits die Berechnung, ob mautpflichtige Strecken befahren wurden, also die Mautobjekterkennung, ebenfalls in der OBU stattfindet. Für den Fall, dass auch die Berechnung der fälligen Mautgebühr in der OBU stattfindet, also die Verknüpfung der durch die Mautobjekterkennung erhaltenen Daten mit Tarifdaten, ist zusätzliche Rechenleistung und zusätzlicher Speicherplatz für die Tarifdaten erforderlich. Vorteilhaft bei einer solchen Ausführungsvariante ist jedoch die Tatsache, dass lediglich die Daten aus der Mautobjekterkennung bzw. die Mautgebührendaten an die zentralen Recheneinheit bzw. den zentralen Rechnerverbund übertragen werden müssen. Eine Übertragung der von der Lokalisierungseinheit ermittelten Positionsdaten an die zentrale Recheneinheit bzw. den zentralen Rechnerverbund ist nicht erforderlich. Änderungen der Geodaten bzw. der Mauttarife jedoch, erfordern die Aktualisierung derselben in jeder OBU über die Datenverbindung. Bei solchen Änderungen kann der erforderliche Datentransfer jedoch relativ gering gehalten werden, in dem nur jene Daten übertragen werden, welche einer Änderung unterworfen worden sind.

Die zweite Variante eines Mauterfassungssystems (zentrales System) sieht vor, dass die von der Lokalisierungseinheit erfassten Positionsdaten, aufbereitet oder unaufbereitet, in ihrer Gesamtheit über die Datenverbindung an die zentrale Recheneinheit bzw. den zentralen Rechnerverbund übermittelt werden und die Auswertung (Mautobjekterkennung, Verknüpfung mit Tarifdaten, Rechnungslegung) zentral vorgenommen wird. Dieses System hat den Vorteil, dass Änderungen der Geodaten oder der Mauttarife sehr einfach in die zentrale Recheneinheit bzw. den zentralen Rechnerverbund eingegeben werden können und damit keine Aktualisierung jeder im Betrieb befindlichen OBU erforderlich ist. Diese Variante weist jedoch den Nachteil auf, dass sehr viele Positionsdaten, an die zentrale Recheneinheit bzw. den zentralen Rechnerverbund übertragen werden müssen.

Die Entscheidung, ob ein Mauterfassungssystem zentral oder dezentral betrieben wird, ist von unterschiedlichen technischen und wirtschaftlichen Randbedingungen abhängig wie beispielsweise der Topologie des zu bemautenden Gebiets, dem Ausbau des zu bemautenden Straßennetzes, dem zu Verfügung stehenden Budget aber auch beispielsweise von der Anbindung an ein Funknetz zur Datenübertragung.

Unabhängig von den beschriebenen Arten eines Mauterfassungssystems ist es bekannt, zur Begleichung der angefallenen Mautgebühren im Voraus bezahlte Mautguthaben zu erwerben. Diese können beispielsweise auf einer Wertkarte gebucht sein, ähnlich einer Telefonwertkarte, die in die OBU geschoben wird, welche dann als Ergebnis der Mautobjekterkennung die Abbuchungen vornimmt, oder aber ist es möglich Inhaber eines Mautkontos zu sein, beispielsweise beim Mautbetreiber, von dem als Ergebnis der Mautobjekterkennung die Abbuchungen vorgenommen werden. Die Mautkonten können beispielsweise elektronisch aufgefüllt werden, etwa mittels Abbuchung über ein Kreditkartenkonto oder via SMS über ein Mobiltelefon, wobei in diesem Fall die Abrechung über die Telefonrechnung erfolgen kann. Es ist aber auch möglich das Mautkonto mittels Standardüberweisung von einem Bankkonto aufzufüllen.

Für die vorliegende Erfindung ist es jedenfalls wichtig, dass bereits Geld an den Mautbetreiber geflossen ist und es sich somit um ein vorausbezahltes Mautguthaben handelt.

In einem solchen Fall ist es für den Mautteilnehmer stets wichtig zu wissen, wie viel Mautguthaben er noch zur Verfügung hat bzw. mit anderen Worten, wie weit er mit diesem Mautguthaben noch bemautete Strassen befahren darf. In der Regel ist jedoch davon auszugehen, dass der Mautteilnehmer nicht vor jedem Fahrtantritt eine Überprüfung des Mautguthabens vornehmen wird. So kann es passieren, dass das Mautguthaben während der Fahrt für den Mautteilnehmer dann überraschend aufgebraucht wird und dieser die bemauteten Straßen verbotener Weise befährt, was zu einer Bestrafung des Mautteilnehmers führt. Der Mautteilnehmer kann aber auch auf das Aufbrauchen des Guthabens während der Fahrt hingewiesen werden, beispielsweise durch eine SMS im Falle eines Mautkontos oder aber durch eine entsprechende Funktionalität der OBU, in welche die Mautwertkarte geschoben ist. Je nach aktueller Position des Mautteilnehmers ist es jedoch nicht immer sofort möglich, das Mautkonto wieder aufzufüllen, weswegen der Mautteilnehmer gezwungen ist, die bemautete Straße zu verlassen und auf nicht bemautete Straßen auszuweichen, was in der Regel mit einem Zeitverlust und zusätzlichen Treibstoffkosten verbunden ist. Es sind auch Fälle bekannt, wo ein rechtzeitiges Verlassen der bemauteten Strasse nicht mehr möglich ist und somit diese, zumindest bis zur nächsten Abfahrt mit aufgebrauchten Mautguthaben befahren werden müssen, was wieder mit einer Geldstrafe für den Mautteilnehmer verbunden ist.

Es ist daher die Aufgabe der vorliegenden Erfindung, ein Verfahren sowie einer Vorrichtung zum automatischen Ausarbeiten einer Route zwischen einem Ausgangspunkt und einem Zielpunkt vorzuschlagen, welches auf die in einem Mauterfassungssystem vorhandenen Randbedingungen Rücksicht nimmt, insbesondere auf ein vorhandenes Mautguthaben.

Erfindungsgemäß wird dies durch die kennzeichnenden Merkmale des Anspruchs 1 erreicht.

Dabei ist es bei einem Verfahren zum automatischen Ausarbeiten einer Route zwischen einem Ausgangspunkt und einem Zielpunkt in einem Navigationssystem eines Fahrzeugs, welches sich in einem Mauterfassungssystem bewegt, bei welchem mit Hilfe von Positionsinformationen ausstrahlenden Einrichtungen ermittelte Positionsdaten des Fahrzeugs mit elektronisch hinterlegten Geodaten, welche zumindest einen Teil des Straßennetzes eines geographischen Gebietes umfassen, zwecks Positionsbestimmung des Fahrzeugs und Mautobjekterkennung verglichen werden, wobei als Ergebnis der Mautobjekterkennung eine Mautgebühr für die Benutzung mautpflichtiger Objekte von einem Mautguthaben abgebucht wird, vorgesehen, dass zum Ausarbeiten der Route der Betrag des Mautguthabens berücksichtigt wird.

Dadurch ist es möglich, die Routenplanung exakt auf das vorhandene Mautguthaben abzustimmen und Mautstrecken nur insofern in der Routenplanung zu berücksichtigen als dies aufgrund des vorhandenen Mautguthabens möglich ist.

Gemäß den kennzeichnenden Merkmalen des Anspruchs 2 ist vorgesehen, dass das erfindungsgemäße Verfahren automatisch gestartet wird, wenn der Betrag des Mautguthabens einen definierten Wert unterschreitet. Es ist also nicht erforderlich, dass vor Fahrtantritt des Mautteilnehmers ein Zielpunkt der Route festgelegt wird. Vielmehr kann das erfindungsgemäße Verfahren auch erst dann automatisch gestartet werden, wenn die Gefahr besteht, dass das vorhandene Mautguthaben zu schnell aufgebraucht wird. Dabei kann beispielsweise das Fahrverhalten der letzten Kilometer berücksichtigt werden, ob hier Mautstrecken befahren wurden, oder aber aus dem gesamten Fahrverhalten des Mautteilnehmers das Verhältnis des Befahrens von bemauteten Strecken zu nicht bemauteten Strecken errechnet werden, um dann mit einer bestimmten Wahrscheinlichkeit darauf zu schließen, dass das Mautguthaben nicht mehr ausreichen wird, um die nächsten, im Voraus zu definierenden, Zeiteinheiten weiter zu fahren. Es sind unzählige andere Möglichkeiten denkbar, welche zu einem automatischen Start des erfindungsgemäßen Verfahrens führen können. Eine bevorzugte Möglichkeit wird es sein, ein Wert des Mautguthabens zu nehmen, der es dem Mautteilnehmer mit Sicherheit noch ermöglicht, die bemautete Strasse zu verlassen und in das nicht bemautete Straßennetz zu wechseln.

Gemäß den kennzeichnenden Merkmalen des Anspruchs 3 ist vorgesehen, dass als Ausgangspunkt die zum Zeitpunkt des Starts des Verfahrens mit Hilfe der Positionsinformationen ausstrahlenden Einrichtungen ermittelte Positionsdaten dienen bzw. daraus errechnete, korrigierte Positionsdaten.

Somit kann das Navigationssystem ausgehend von der Position, die der Mautteilnehmer zum Zeitpunkt als er die Warnung, dass das verbleibende Mautguthaben einen definierten Betrag unterschreitet, inne hatte, eine Route ausarbeiten, die ihn zu einem Zielpunkt führt, wobei das Navigationssystem das verbleibende Mautguthaben in die Routenplanung miteinbezieht. Alternativ kann anstelle der ermittelten Positionsdaten auch korrigierte Positionsdaten als Ausgangspunkt für die Routenplanung herangezogen werden. Dies insbesondere dann, wenn mit Hilfe der Positionsinformationen ausstrahlenden Einrichtungen ermittelte Positionsdaten rechnerisch korrigiert werden, um eine eventuell auftretende Abweichung auszugleichen.

Die kennzeichnenden Merkmale des Anspruchs 4 sehen vor, dass der Ausgangspunkt manuell definiert wird.

Gemeinsam mit den kennzeichnenden Merkmalen des Anspruchs 10, der vorsieht, dass der Zielpunkt manuell definiert wird und die Route durch Auswahl von mautpflichtigen und nicht mautpflichtigen Strecken so gewählt wird, dass der verbleibende Betrag des Mautguthabens nicht überschritten wird, handelt es sich dabei grundlegend um das bereits bekannte Verfahren der Routenplanung, bei welchem Ausgangspunkt und Zielpunkt manuell definiert werden. Erfindungsgemäß wird jedoch bei der Ausarbeitung der Route das vorhandene Mautguthaben berücksichtigt und die Route so gewählt, dass so lange wie es das Mautguthaben zulässt mautpflichtige Strecken befahren werden und erst dann auf nicht mautpflichtige Straßen ausgewichen wird, wobei die Benutzung der mautpflichtigen Straße nicht unbedingt am Beginn der Route erfolgen muss, sondern von anderen Kriterien abhängig sein kann, auf die noch später näher eingegangen wird.

Für den Fall, dass der Zielpunkt manuell definiert wird, kann gemäß den kennzeichnenden Merkmalen es Anspruchs 11 vorgesehen sein, dass zumindest ein Zwischenzielpunkt vorgesehen wird, an dem ein Aufladen des Mautguthabens möglich ist. Das erfindungsgemäße Verfahren ermöglicht dem Mautteilnehmer somit unter Berücksichtigung des verbleibenden Mautguthabens eine Auflademöglichkeit anzusteuern. Diese kann beispielsweise eine Tankstelle sein, die Mautwertkarten verkauft aber auch ein Terminal, dass eine elektronische Aufbuchung ermöglicht. Auch andere Varianten, die das Aufladen ermöglichen, sind denkbar.

Gemäß den kennzeichnenden Merkmalen des Anspruchs 5 wird als Zielpunkt eine Position im in den Geodaten hinterlegten Straßennetz automatisch gewählt, welcher mit dem Mautguthaben erreicht werden kann, ohne diesen Betrag zu verbrauchen.

Diese bevorzugte Ausführungsform der Erfindung wird insbesondere dann angewandt, wenn ein Zielpunkt manuell nicht definiert wurde und das erfindungsgemäße Verfahren in einem Navigationssystem eines Kraftfahrzeugs aufgrund des Unterschreitens eines bestimmten Mautguthabens automatisch aktiviert wird. Mangels vorhandenem Zielpunkt, den der Mautteilnehmer in das Navigationssystem manuell eingegeben hat, wird er automatisch auf der gerade befahrenen mautpflichtigen Straße solange weitergeführt, bis er, ohne das Mautguthaben aufzubrauchen, auf eine nicht bemautete Straße abfahren kann. Das Verfahren kann dabei insofern optimiert werden, als dabei das Mautguthaben optimal ausgenutzt wird, d.h. der Mautteilnehmer wird solange auf der mautpflichtigen Straße geführt, bis das weitere Befahren ohne Aufbrauchen des Mautguthabens nicht mehr möglich ist. In diesem Fall muss jene Abfahrt von der mautpflichtigen Straße genommen werden, die gerade noch mit dem vorhandenen Mautguthaben erreichet werden kann. Alternativ kann aber auch die nächste Abfahrt von der mautpflichtigen Straße vorgeschlagen werden wobei das vorhandene Mautguthaben nicht optimal ausgenutzt wird.

Die kennzeichnenden Merkmale des Anspruchs 6 sehen vor, dass als Zielpunkt eine Position im in den Geodaten hinterlegten Straßennetz automatisch gewählt wird, welcher mit dem Mautguthaben erreicht werden kann, ohne diesen Betrag zu verbrauchen und an welcher eine Aufladung des Mautguthabens möglich ist. Ziel dabei ist es, den Mautteilnehmer, wenn möglich, nicht von der bemauteten Straße zu führen, sondern stattdessen auf der bemauteten Straße zu einer Position zu führen, wo eine Aufladung des Mautguthabens möglich ist.

Diese Position kann gemäß den kennzeichnenden Merkmalen des Anspruchs 7 ein Gebiet mit ausreichend Signalstärke zur mobilen Datenübermittlung sein. Auf diese Art und Weise kann das Maututhaben beispielsweise mittels SMS (Short Message Service) aufgeladen werden. Bei Vorhandensein ausreichender Signalstärke zur mobilen Datenübermittlung ist es aber auch möglich, das Mautguthaben mittels Onlineüberweisung wieder aufzuladen bzw. sind andere, online durchführbare Aufladevorgänge möglich.

Gemäß Anspruch 8 kann diese Position eine Verkaufsstelle für Mautguthaben aufweisende Wertkarten sein.

Gemäß Anspruch 9 kann diese Position aber auch ein Terminal zum elektronischen Aufladen des Mautguthabens sein.

Die kennzeichnenden Merkmale des Anspruchs 10 sehen vor, dass der Zielpunkt manuell definiert wird und die Route durch Auswahl von mautpflichtigen und nicht mautpflichtigen Strecken so gewählt wird, dass der Betrag des Mautguthabens nicht verbraucht wird. In Kombination mit den Merkmalen des Anspruchs 4 handelt es sich dabei um den bereits bekannten Vorgang einer Routenplanung durch ein Navigationssystem mit dem erfindungsgemäßen Vorteil, dass das Mautguthaben des Mautteilnehmers bei der Ausarbeitung der Route zwischen Ausgangspunkt und Zielpunkt berücksichtigt wird und die Benutzung von mautpflichtigen Straßen entsprechend einem verbleibenden Mautguthaben in die Routenplanung miteingebaut wird.

Dabei kann gemäß den kennzeichnenden Merkmalen des Anspruchs 11 vorgesehen sein, dass der Zielpunkt manuell definiert wird und zumindest ein Zwischenzielpunkt vorgesehen wird, an dem ein Aufladen des Mautguthabens möglich ist.

Die ausgearbeitete Route kann dann auch eine Benutzung von Mautstraßen vorsehen, für die das vorhandene Mautguthaben nicht ausreichen würde. Allerdings führt die Route in diesem Fall über eine Position, welche das Aufladen des Mautguthabens ermöglicht.

Anspruch 12 betrifft eine Vorrichtung zur Ausarbeitung einer Route, vorzugsweise Navigationssystem in einem Fahrzeug zur Ausarbeitung einer Route zwischen einem Ausgangspunkt und einem Zielpunkt, wobei erfindungsgemäß eine Auswerteinrichtung vorgesehen ist, welche bei der Ausarbeitung der Route ein Mautguthaben berücksichtigt.

Im Anschluss erfolgt nun eine detaillierte Beschreibung des erfindungsgemäßen Verfahrens anhand von zwei Beispielen.

### Keine manuelle Eingabe von Ausgangspunkt und Zielpunkt

Der Mautteilnehmer befindet sich auf einer Fahrt auf einer Mautstraße. Das Mauterfassungssystem arbeitet nach dem zentralen System, das heißt die Positionsdaten die mittels GPS oder aufgrund des Durchfahrens von Mautportalen ermittelt werden, werden an eine zentrale Recheneinheit bzw. einen zentralen Rechnerverbund übermittelt wo dann die Auswertung (Mautobjekterkennung) der ermittelten Positionsdaten durch Vergleich mit gespeicherten Geodaten erfolgt. Als Ergebnis der Mautobjekterkennung erfolgt eine Verknüpfung mit Tarifdaten zur Mautgebührenberechnung und daran anschließend eine Abbuchung vom Mautkonto des Mautteilnehmers, welches beispielsweise ein wirkliches elektronisches Konto sein kann, das der Mautbetreiber für den Mautteilnehmer eingerichtet hat, oder aber auf einer Mautwertkarte gespeichert sein kann, die der Mautteilnehmer in die OBU einführen kann. In letzterem Fall ist es natürlich erforderlich, dass das auf der Mautwertkarte gespeicherte Mautguthaben der zentralen Recheneinheit bzw. dem zentralen Rechnerverbund kontinuierlich bzw. in regelmäßigen Abständen übermittelt wird.
Durch das Befahren der bemauteten Straße wird das Mautguthaben ständig reduziert bis ein vordefinierter Betrag erreicht ist. Erfindungsgemäß wird zu diesem Zeitpunkt das erfindungsgemäße Verfahren gestartet und es erfolgt die Ausarbeitung einer Route, welche als Ausgangspunkt jene Position des Fahrzeugs des Mautteilnehmers nimmt, an welcher der vordefinierte Betrag erreicht wurde. Als Zielpunkt wird automatisch entweder eine Position im nicht bemauteten Straßennetz gewählt, welche bei gleichzeitiger Benutzug des bemauteten Straßennetzes, ohne jedoch das verbleibende Mautguthaben zu verbrauchen, erreicht werden kann oder aber wird als Zielpunkt eine Position automatisch gewählt, die das Aufladen des Mautguthabens ermöglicht, beispielsweise eine Raststation, ein elektronisches Terminal oder aber einfach ein Gebiet mit ausreichender Versorgung für die mobile Datenkommunikation.

### Manuelle Eingabe von Ausgangspunkt und Zielpunkt

Der Mautteilnehmer programmiert das Navigationssystem seines Kfz mit einer Route, die ihn zu einem gewünschten Zielpunkt führt. Erfindungsgemäß wird beim Ausarbeiten der Route gleich berücksichtigt, über wie viel Mautguthaben der Mautteilnehmer noch verfügt, beispielsweise durch Auslesen der Wertkarte bzw. durch Abfragen des Mautkontos. Dementsprechend wird die Route dann ausgearbeitet, dass heißt es werden nur so viele Entfernungseinheiten Mautstraßen geplant, wie dies mit dem vorhandenen Mautguthaben möglich ist. Die verbleibende Strecke wird über nicht bemautete Straßen geplant.

Alternativ dazu kann auch die gesamte Strecke bis zum Zielpunkt über Mautstraßen geplant werden, falls dies möglich ist, bzw. kann bei der Routenplanung die maximal mögliche Entfernungseinheitenanzahl ausgenutzt werden, auch wenn das Mautguthaben dafür nicht ausreichend sollte. Dabei wird jedoch ein Zwischenziel in die Routenplanung mitaufgenommen, wo das Aufladen des Mautguthabens möglich ist.

In allen beschrieben Fällen erfolgt die Routenplanung unter Berücksichtigung diverser anderer zum Teil schon bekannter Faktoren wie beispielsweise Zeitaufwand, Treibstoffverbrauch, Umweltbelastung, etc. Das Kriterium bei der Routenwahl kann jedenfalls durch den Mautteilnehmer frei gewählt werden. So muss das Mautguthaben bei einer Routenplanung nicht unbedingt gänzlich verbraucht werden, wenn sich herausstellt, dass eine andere Route schneller zum Ziel führt. Beispielsweise kann sich aber auch die schnellste Route, die mit dem verbleibenden Mautguthaben noch befahrbar ist, als jene Route herausstellen, welche mit dem höchsten Treibstoffverbrauch verbunden ist, so dass auch in einem solchen Fall, falls der Mautteilnehmer als Kriterium den geringsten Treibstoffverbrauch gewählt hat, eine andere Route vorgeschlagen wird, solange nur das Mautguthaben nicht überschritten wird.

Bei der erfindungsgemäßen Berücksichtigung des Mautguthabens handelt es sich somit um ein Kriterium, das stets mit allen anderen auswählbaren Kriterien kombiniert wird und jedenfalls alle anderen Kriterien entsprechend beschränkt, da die schnellste Route oder die sparsamste Route oder beispielsweise die umweltschonendste Route stets nur dann befahren werden kann, wenn der Mautteilnehmer über ausreichend Mautguthaben verfügt, sofern das Anwenden dieser Kriterien die Befahrung von Mautstrecken vorsieht.

## Patentansprüche

1. Verfahren zum automatischen Ausarbeiten einer Route zwischen einem Ausgangspunkt und einem Zielpunkt in einem Navigationssystem eines Fahrzeugs, welches sich in einem Mauterfassungssystem bewegt, bei welchem mit Hilfe von Positionsinformationen ausstrahlenden Einrichtungen ermittelte Positionsdaten des Fahrzeugs mit elektronisch hinterlegten Geodaten, welche zumindest einen Teil des Straßennetzes eines geographischen Gebietes umfassen, zwecks Positionsbestimmung des Fahrzeugs und Mautobjekterkennung verglichen werden, wobei als Ergebnis der Mautobjekterkennung eine Mautgebühr für die Benutzung mautpflichtiger Objekte von einem Mautguthaben abgebucht wird, **dadurch gekennzeichnet, dass** zum Ausarbeiten der Route der Betrag des Mautguthabens berücksichtigt wird.

2. Verfahren nach Anspruch 1, **dadurch gekennzeichnet, dass** es automatisch gestartet wird, wenn der Betrag des Mautguthabens einen definierten Wert unterschreitet.

3. Verfahren nach Anspruch 2, **dadurch gekennzeichnet, dass** als Ausgangspunkt die zum Zeitpunkt des Starts des Verfahrens mit Hilfe der Positionsinformationen ausstrahlenden Einrichtungen ermittelte Positionsdaten dienen bzw. daraus errechnete, korrigierte Positionsdaten.

4. Verfahren nach Anspruch 1, **dadurch gekennzeichnet, dass** der Ausgangspunkt manuell definiert wird.

5. Verfahren nach einem der Ansprüche 1 bis 4, **dadurch gekennzeichnet, dass** als Zielpunkt eine Position im in den Geodaten hinterlegten nicht mautpflichtigen Straßennetz automatisch gewählt wird, welcher mit dem Mautguthaben erreicht werden kann, ohne diesen Betrag zu verbrauchen.

6. Verfahren nach einem der Ansprüche 1 bis 4, **dadurch gekennzeichnet, dass** als Zielpunkt eine Position im in den Geodaten hinterlegten Straßennetz automatisch gewählt wird, welcher mit dem Mautguthaben erreicht werden kann, ohne diesen Betrag zu verbrauchen und an welcher eine Aufladung des Mautguthabens möglich ist.

7. Verfahren nach Anspruch 6, **dadurch gekennzeichnet, dass** es sich bei dieser Position um ein Gebiet mit ausreichend Signalstärke zur mobilen Datenübermittlung handelt.

8. Verfahren nach Anspruch 6, **dadurch gekennzeichnet, dass** es sich bei dieser Position um eine Verkaufsstelle für Mautguthaben aufweisende Wertkarten handelt.

9. Verfahren nach Anspruch 6, **dadurch gekennzeichnet, dass** es sich bei dieser Position um ein Terminal zum elektronischen Aufladen des Mautguthabens handelt.

10. Verfahren nach Anspruch 4, **dadurch gekennzeichnet, dass** der Zielpunkt manuell definiert wird und die Route durch Auswahl von mautpflichtigen und nicht mautpflichtigen Strecken so gewählt wird, dass der Betrag des Mautguthabens nicht verbraucht wird.

11. Verfahren nach Anspruch 4, **dadurch gekennzeichnet, dass** der Zielpunkt manuell definiert wird und zumindest ein Zwischenzielpunkt vorgesehen wird, an dem ein Aufladen des Mautguthabens möglich ist.

12. Vorrichtung zur Ausarbeitung einer Route, vorzugsweise Navigationssystem in einem Fahrzeug zur Ausarbeitung einer Route zwischen einem Ausgangspunkt und einem Zielpunkt, **dadurch gekennzeichnet, dass** eine Auswerteinrichtung vorgesehen ist, welche bei der Ausarbeitung der Route ein Mautguthaben berücksichtigt.
